# EUROPEAN PATENT APPLICATION

(11) **EP 0 714 856 A1**
(43) Date of publication of application: **05.06.1996**
(21) Application number: 95307591.8
(22) Date of filing: 25.10.1995
(51) Int. Cl.: C02F 1/52, C02F 3/28

(54) **Sewage treatment**

(30) Priority: 25.11.1994 GB 9423784
(71) Applicant: TIOXIDE GROUP SERVICES LIMITED, London W14 0QL (GB)
(72) Inventor: Green, Frederick Terence, Duffield, Belper, Derbyshire DE56 4BG (GB); Dowell, Andrew Mark, Beeston, Nottingham NG9 6LH (GB)
(74) Representative: Jackson, John Derek

(57) **Abstract**

A process for treating sewage comprises the addition of a water soluble compound of iron to sewage before the sewage is subjected to primary settlement or clarification. The iron compound is added at a rate between 0.2 and 4.0 mg per litre calculated as Fe. Preferred iron compounds are ferrous or ferric sulphate and a preferred method of addition utilises a saturator. The process reduces the quantity of hydrogen sulphide produced during sewage treatment and is more economical than known processes.

## Description

This invention relates to the treatment of sewage and in particular to the treatment of sewage by the addition of iron compounds.

In a modern sewage treatment plant the sewage is usually processed in a number of stages including clarification, settlement and digestion to produce a sludge which is separated from the water present. This sludge is usually thickened and may be converted into a combustible gaseous fuel frequently called biogas.

Unless specifically treated, this biogas normally contains a proportion of hydrogen sulphide which causes corrosion in the equipment used for combustion of the biogas and causes severe odour problems in the sewage works. The quantity of hydrogen sulphide present in the biogas can be reduced by the addition of iron compounds such as ferrous or ferric chloride to the sludge prior to, during, or after it is thickened. It is believed that the iron compounds reduce the amount of hydrogen sulphide by precipitating sulphide ions as iron sulphide.

However, it has been found that the quantity of iron compound which needs to be added to reduce the proportion of hydrogen sulphide in the biogas to an acceptable level is significantly more than the quantity which would be expected by calculation based on the quantity of sulphide ions present in the sewage sludge.

It is an object of the current invention to provide a more efficient and more economical process for reducing the quantity of hydrogen sulphide in the biogas produced from a sewage treatment plant.

According to the invention, a process for the treatment of sewage comprises adding to sewage a water soluble compound of iron at a concentration between 0.2 and 4.0 mg per litre calculated as weight of Fe per litre of sewage, the compound of iron being added to the sewage before the sewage is subjected to primary settlement or clarification in a sewage treatment plant.

The process of the invention is effective in reducing to an acceptable level the amount of hydrogen sulphide in the biogas produced from a sewage treatment plant utilising the process and the quantity of iron compound needed to produce this reduction in hydrogen sulphide content is much less than that required in known processes.

The quantity of water soluble compound of iron which is useful in the process of the invention varies to some extent with the composition of the sewage. However, it has been found that a concentration between 0.5 and 3.0 mg Fe per litre of sewage is generally preferred and the most preferred concentration is between 1.0 and 2.0 mg Fe per litre of sewage. The amount needed for any particular sewage treatment plant can be determined by monitoring the level of hydrogen sulphide in the biogas and adjusting the amount of iron compound added accordingly.

The iron compound used must be water soluble in order to be effective. However, it is not necessary that the compound has a high solubility in water. Any compound which can be added to the sewage to provide a concentration of ferrous or ferric ions within the range specified above is suitable.

The iron compound can be a ferrous or a ferric salt and typical useful compounds include ferrous chloride, ferric chloride, ferrous nitrate, ferric nitrate, ferrous sulphate, ferric sulphate and ferrous acetate. Ferrous sulphate is particularly useful and economical because of its ready availability.

One form of ferrous sulphate which is useful in the process of this invention is ferrous sulphate which is generated as a by-product from processing iron/titanium ores such as ilmenite to produce titanium dioxide using the "sulphate" process. This form of ferrous sulphate is frequently referred to as copperas. This copperas usually contains a small amount of free sulphuric acid (approximately 0.3 per cent by weight) and is sometimes washed with sulphuric acid to increase resistance to oxidation during storage and transport. This acid-washed copperas, which generally contains from 0.5 per cent to 0.8 per cent by weight free sulphuric acid, can be used to advantage in the process of this invention.

An alternative iron compound of use in the invention is ferric sulphate and, in particular, a partially polymerised form of ferric sulphate which is stoichiometrically deficient in sulphate moiety.

The iron compound can be added to the sewage in any form but it is preferred that it is added as a liquid to assist in maintaining a consistent dosing level.

A preferred process for adding ferrous sulphate employs a dissolving system known as a saturator. Solid ferrous sulphate is added to the saturator and water is caused to flow through the ferrous sulphate at such a rate that a saturated solution of ferrous sulphate is formed and removed from the saturator. The saturator is replenished with ferrous sulphate, usually batchwise, as needed to ensure that a saturated solution is produced continuously. The use of a saturator on site at a sewage treatment plant is a particularly economical method of utilising ferrous sulphate which can be transported to the plant as a solid.

The use of acid-washed copperas in a saturator is a particularly preferred embodiment of this invention since the presence of a small amount of acid in the copperas assists in dissolving the ferrous sulphate.

A means of controlling the rate of addition of the iron compound to the sewage is normally employed. Typically for liquids such as a saturated solution produced in a saturator the means is a dosing pump.

After addition of the iron compound, the sewage is treated by conventional clarification, settlement, digestion and concentration processes.

As mentioned above, the process of the invention provides an economical means of reducing the level of hydrogen sulphide present in any biogas produced from the plant. The process is also an improvement over known processes utilising iron to reduce sulphide levels, the addition of the iron compound at an early stage of the sewage treatment ensures that the iron is well-dispersed within the sewage and results in less odour since the sulphide ions present are rapidly converted to iron sulphides. Use of iron salts in accordance with the invention means that the iron passes through the sewage treatment plant and into the anaerobic digester as a non-corrosive compound of iron.

The invention is illustrated by the following examples.

### EXAMPLE 1

The input to a sewage treatment works was dosed with ferrous sulphate according to the following procedure.

Solid ferrous sulphate (copperas by-product from the manufacture of titanium dioxide) was converted to a saturated solution by means of a saturator. The saturated solution was continuously dosed into the inlet pipe of the sewage works at a rate equivalent to 1.2 mg Fe per litre of sewage.

The proportion of hydrogen sulphide in the biogas produced from the works was monitored for 70 days before dosing began and for a further 60 days after dosing started. Without the Fe dosing the hydrogen sulphide content varied between 1200 and 2100 ppm. About 10 days after the dosing commenced the level of hydrogen sulphide started to drop rapidly to about 700 ppm after 20 days and 400 ppm after 30 days. The level stayed at approximately 400 ppm for the remaining 40 days of the test. This level is well below the level of 700 ppm considered to be the maximum tolerable level for operation of a CHP engine.

### EXAMPLE 2

A form of ferric sulphate was used to treat the throughput of a sewage treatment plant which was known to have problems with the evolution of hydrogen sulphide.

The ferric sulphate used was a product sold under the name Feripol (Trade Mark, Tioxide Europe Limited). This product is an aqueous solution containing approximately 45% by weight of a partially polymerised ferric sulphate. It is deficient in sulphate, containing 87% of the stoichiometric quantity of sulphate ions. The quantity of ferrous ions is less than 0.2% by weight of solution.

The Feripol solution was added to the incoming sewage stream in the combined supernatant chamber. In this chamber the incoming crude sewage is mixed with supernatant liquors recycled from downstream processes. Addition at this point helps to ensure good mixing of the ferric sulphate with the sewage. During the first 24 hours the Feripol solution was added at a rate of 8 mg Fe per litre of sewage but after 24 hours the dose rate was reduced to and maintained at 3.3 mg Fe per litre of sewage.

A rapid test for assessing hydrogen sulphide evolution was developed. A 250 ml sample of liquors under investigation was taken in a 500 ml screw top bottle. The sample was shaken for 30 seconds and the air space in the bottle was analysed using a detector tube for airborne sulphides. The test does not provide a precise measurement of sulphides present but it is a measure of the amount of sulphide which can potentially be released to atmosphere.

It was known that the principal sources of hydrogen sulphide at the sewage works were the sludge thickener tanks. The supernatant liquors from the primary thickeners and from the surplus activated sludge (SAS) thickener chamber were monitored before and after the dosing with ferric sulphate commenced using the above test. Before dosing started the average sulphide level from the primary thickener supernatant liquors was 700 ppm with peak levels of 2000 ppm. The dosing was continued for 1 month during which the average sulphide level from the primary thickener supernatant liquors was 150 ppm with a peak of 600 ppm, this peak being attributed to a change in operational procedure. During the trial a zero level of sulphide, never before observed, was noticed on two occasions.

Before dosing started the average sulphide level from the SAS thickener supernatant liquors was 80 ppm with a peak of 400 ppm. During the trial the average level was 10 ppm with no observed values above 30 ppm.

The hydrogen sulphide level in the digester gas tanks was also monitored. The normal practice at the sewage works is to add ferric chloride to the sludge line to the digesters but only one digester can be dosed at a time. At the commencement of the trial described above no ferric chloride was being added to No.2 Digester and the average hydrogen sulphide level was 1450 ppm. The level fell rapidly after dosing with Feripol solution commenced to 600 ppm after 10 days and declined further to 200 ppm by the end of the trial.

## Claims

1. A process for the treatment of sewage comprising adding to sewage a water soluble compound of iron characterised in that the water soluble compound of iron is added to the sewage at a concentration between 0.2 and 4.0 mg per litre calculated as weight of Fe per litre of sewage before the sewage is subjected to primary settlement or clarification in a sewage treatment plant.

2. A process according to claim 1 characterised in that the water soluble compound of iron has a concentration between 0.5 and 3.0 mg Fe per litre of sewage.

3. A process according to claim 1 or 2 characterised in that the water soluble compound of iron has a concentration between 1.0 and 2.0 mg Fe per litre of sewage.

4. A process according to any one of the preceding claims characterised in that the water soluble compound of iron is ferrous choride, ferric chloride, ferrous nitrate, ferric nitrate, ferrous sulphate, ferric sulphate or ferrous acetate.

5. A process according to any one of the preceding claims characterised in that the water soluble compound of iron is ferrous sulphate isolated from a process in which titanium dioxide is produced from ilmenite.

6. A process according to claim 5 characterised in that the ferrous sulphate is acid-washed and contains from 0.5 per cent to 0.8 per cent by weight free sulphuric acid.

7. A process according to any one of claims 1 to 4 characterised in that the water soluble compound of iron is a partially polymerised ferric sulphate which is stoichiometrically deficient in sulphate moiety.

8. A process according to any one of the preceding claims characterised in that the water soluble compound of iron is added to the sewage in the form of a liquid.

9. A process according to any one of claims 1 to 6 or 8 characterised in that the water soluble compound of iron is ferrous sulphate which is dissolved in a saturator and added to the sewage as a saturated aqueous solution.
